# EUROPÄISCHE PATENTSCHRIFT

(11) **EP 0 663 536 B1**
(45) Veröffentlichungstag und Bekanntmachung des Hinweises auf die Patenterteilung: **09.09.1998**
(21) Anmeldenummer: 94117976.4
(22) Anmeldetag: 15.11.1994
(51) Int. Cl.: F16B 19/10

(54) **Blindniet und Verfahren zu seiner Herstellung**
Blind rivet and method for its fabrication
Rivet aveugle et méthode pour sa fabrication

(30) Priorität: 17.12.1993 DE 4343171
(43) Veröffentlichungstag der Anmeldung: 19.07.1995
(73) Patentinhaber: GESIPA Blindniettechnik Gesellschaft mit beschränkter Haftung, D-60528 Frankfurt (DE)
(72) Erfinder: Gossmann, Richard, D-63128 Dietzenbach (DE); Ditzel, Eckhard, D-64390 Erzhausen (DE)
(74) Vertreter: Knoblauch, Andreas, Dr.-Ing.

(56) Entgegenhaltungen:
- EP-A- 0 168 355
- EP-B- 0 277 759
- GB-A- 640 451
- US-A- 4 639 175
- US-A- 4 810 141

## Beschreibung

Die Erfindung betrifft einen Blindniet mit einem Zugdorn, der einen Dornkopf und einen Dornschaft aufweist, und mit einer im wesentlichen zylinderförmigen Niethülse, die den Zugdorn auf einem Teil seiner Länge umgibt, und die in Längserstreckung mindestens eine Schwächungszone aufweist, wobei jede Schwächungszone durch mehrere in Umfangsrichtung verteilte und im wesentlichen an der gleichen axialen Position angeordneten Ausnehmungen gebildet ist.

Bei einem bekannten Blindniet dieser Art (EP 0 168 355 A1) sind mehrere Schwächungszonen vorgesehen, die in Längsrichtung voneinander beabstandet sind und durch kontinuierlich oder diskontinuierlich umlaufende Nuten oder Ausnehmungen gebildet sind. Derartige Blindniete werden auch als Mehrbereichs-Blindniete eingesetzt. Mit solchen Blindnieten ist man bei der Fertigung, d.h. beim Verbinden von zwei oder mehr Teilen, relativ flexibel. Man kann innerhalb gewisser Grenzen unterschiedliche Materialstärken miteinander vernieten, ohne jeweils angepaßte Blindniete verwenden zu müssen. Schwierigkeiten bereitet hierbei jedoch das "Schließverhalten" des bekannten Niets. Vielfach ist keine zufriedenstellende Ausbildung des Nietkopfes zu beobachten, so daß die Nietverbindung nicht die gewünschte oder notwendige Festigkeit erhält.

Ein weiterer Blindniet ist aus EP 0 277 759 B1 bekannt, bei dem die Schwächungszonen ebenfalls durch kreisförmig umlaufende kontinuierliche oder unterbrochene Nuten oder andere Formen der Schwächungszonen gebildet sind. Derartige Ausnehmungen werden im allgemeinen durch Rollieren hergestellt. Beim Rollieren wird die Niethülse aufgeweitet, so daß sie nicht mehr mit der nötigen Reibung auf dem Zugdorn festsitzt und sich deswegen auf dem Zugdorn verschieben kann. Das macht es schwierig, die bekannten Blindniete zu handhaben. Vor dem Setzen muß deshalb in vielen Fällen die Niethülse auf dem Zugdorn wieder richtig positioniert werden bzw. es muß mit dem Niet- oder Setzgerät mehrfach nachgefaßt werden, weil der Setzhub ansonsten nicht ausreicht, wodurch der zeitliche Vorteil, der eigentlich durch die Verwendung des Mehrbereichs-Blindniets gewonnen werden sollte, zum Teil wieder verlorengeht.

Der Erfindung liegt daher die Aufgabe zugrunde, einen flexibel verwendbaren Blindniet anzugeben, der bei einfacher Handhabung ein verbessertes Schließverhalten zeigt.

Diese Aufgabe wird bei einem Blindniet der eingangs genannten Art dadurch gelöst, daß die Böden der Ausnehmungen jeweils im wesentlichen eine Sekante zum Zylinderumfang der Niethülse bilden oder in Radialrichtung innerhalb dieser Sekante verlaufen, so daß sie in ihrer Mitte weiter in Richtung auf die Mittelachse der Niethülse vertieft sind als an deren Rändern. Bei dieser Ausbildung sind die Ausnehmungen in Umfangsrichtung nicht einfach unterbrochen, was zu einer geringeren Materialschwächung der Niethülse und damit zu einer höheren Festigkeit bei der später fertigzustellenden Nietverbindung führt. Die Ausnehmungen haben vielmehr eine Form, die einen allmählichen Übergang von einer dünnen Materialstärke der Niethülse im Bereich der Mitte der Ausnehmung zu einer dickeren Materialstärke führt, die bei der Unterbrechung der Ausnehmungen vorliegt. Die Spannungen, die sich beim Ausbilden des Nietkopfes aufbauen, können sich dann im Material gleichmäßiger und besser verteilen. Die Gefahr einer Rißbildung im Querschnitt des Nietkopfes wird drastisch verringert. Das Material kann bei der Ausbildung des Nietkopfes wesentlich besser fließen. Hierbei bilden die Unterbrechungen der Ausnehmungen sozusagen "Stützstellen", die nicht nur bei der unverarbeiteten Niethülse, sondern auch und gerade bei einer fertiggestellten Nietverbindung zu einem verbesserten Aufbau des Niet- oder Schließkopfes führen. Diese Verbesserung wird unter anderem darauf zurückgeführt, daß mehr Material übrig bleibt, das für den Aufbau des Kopfes verwendet werden kann. Darüber hinaus ist die Fertigung einfacher, weil bei einem Anbringen der Ausnehmungen keine Aufweitungen der Niethülse erfolgt.

Die Böden der Ausnehmungen bilden hierbei in einer Alternative Sekanten, also im wesentlichen gerade Linien, die parallel zu einer Tangente an den Zylinderumfang verlaufen. Die Böden können jedoch in ihrer Mitte noch weiter in Richtung auf die Mittelachse der Niethülse vertieft sein. In diesem Fall können die Vertiefungen z.B. einen Querschnitt aufweisen, der durch zwei Kreislinien begrenzt ist, nämlich zum einen die Umfangslinie der Niethülse und zum anderen durch die Umfangslinie eines (gedachten) Kreises, dessen Mittelpunkt radial außerhalb der Niethülse liegt. In jedem Fall nimmt die durch die Ausnehmung gebildete Materialschwäche in Umfangsrichtung bis etwa in die Mitte der Ausnehmung ab und dann wieder zu. Dies hat auch eine verbesserte Lochleibung zur Folge. Das zwischen den Ausnehmungen verbleibende Material in Verbindung mit dem nur allmählich abnehmenden Materialquerschnitt bildet Stützstellen oder Stabilisatoren, die beim Aufbringen einer Zugoder Axialkraft zu einer symmetrischen Stauchung mit einhergehender radialer Aufweitung der Niethülse auch im Bereich des Fügegutes, also der zu verbindenden Teile, führt. Hierbei legt sich die Niethülse allseits innen an die Bohrung an, erzielt also eine gute Lochleibung. Dies ist ein besonderes Qualitätsmerkmal einer Nietverbindung. Ohne die spezielle Ausbildung der Ausnehmungen ist beobachtet worden, daß die Niethülse entlang ihrer Längsachse radial ausknickt, so daß das Loch nicht ausreichend ausgefüllt wird. Insbesondere bei Sacklochvernietungen, bei denen der Blindniet durch die durch die Ausgestaltung der Ausnehmungen bedingte radiale Aufweitung einen sogenannten Dübeleffekt erzielt, kommt die Verbindung praktisch nur über die Lochleibung zustande. Die Ausnehmungen und die dadurch bedingte Wulstbildung erzielen einen hohen Reibeffekt mit anschließendem Formschluß. Dies erhöht die Auszugskräfte ganz wesentlich. Durch die symmetrische Stauchung mit einhergehender radialer Aufweitung können Bohrlochtoleranzen in gewissem Umfang ausgeglichen werden, wobei eine gute Lochleibung erzielt wird.

Es ist von Vorteil, wenn die Ausnehmungen paarweise einander diametral gegenüberliegend angeordnet sind. Bei der Herstellung der Niete können sich die Kräfte, die notwendig sind, um die Ausnehmungen zu erzeugen, gegenseitig aufheben.

In einer besonderen Ausgestaltung sind vier Ausnehmungen vorgesehen. Diese Anzahl ist ausreichend, um zu der gewünschten Faltenbildung des Nietkopfes zu führen, wenn Material vernietet werden soll, das nur eine geringere Dicke hat. Vier Ausnehmungen bilden aber noch keine nennenswerte Schwächung des Materials der Niethülse, so daß die Nietverbindung relativ stabil bleibt. Vier Ausnehmungen lassen sich durch die Bildung von zwei Paaren von Ausnehmungen herstellen.

Vorzugsweise weist die Niethülse in einem vorbestimmten Winkelbereich zwischen den jeweiligen Ausnehmungen im wesentlichen die Form eines Hohlzylinders auf. In diesem Bereich zwischen den Ausnehmungen muß die Niethülse also gar nicht bearbeitet sein. Sie behält vielmehr mindestens ihre ursprüngliche Stärke, wobei natürlich eine geringfügige Verformung beim Anbringen der Ausnehmungen auftreten kann. Durch die Auswahl des verbleibenden, unbearbeiteten Bereichs kann die Festigkeit und die Verarbeitbarkeit des Nietes in gewissen Grenzen variiert werden.

Vorzugsweise sind die Ausnehmungen durch Einprägungen gebildet. Bei dieser Ausbildung erfolgt die Herstellung der Ausnehmungen nicht durch die Wegnahme von Material, sondern lediglich durch die Verformung des Materials der Niethülse. Diese Verformung führt zu einer Verfestigung und Änderung des Spannungsverlaufs, die später zu einer Falten- oder Wulstbildung der Niethülse in einzelnen Ringen führt.

Vorzugsweise weisen die Ausnehmungen einen abgerundeten Querschnitt auf. Dies gewährleistet ein besseres Fließverhalten der Niethülse bei der Ausbildung des Kopfes. Eine Rißbildung, wie sie etwa durch scharfe Ecken produziert werden könnte, wird zuverlässig verhindert.

Vorzugsweise ist die Niethülse im Bereich der Ausnehmungen nach innen ausgeformt und liegt mit den so gebildeten Vorsprüngen am Dornschaft an. Die Verformung der Niethülse beim Einbringen der Ausnehmungen führt also nicht nur zu einer äußerlichen Verformung der Niethülse, die später durch die Ausnehmungen sichtbar wird. Sie führt auch zu einer Verformung der Niethülse in dem Bereich, der dem Zugdorn zugewandt ist. In diesem Bereich führt die Ausbildung der Ausnehmungen dazu, daß die Niethülse nun am Zugdorn anliegt. Diese Anlage ist auf Punkte oder relativ kleine Flächen begrenzt. Sie gewährleistet einerseits, daß die Niethülse mit der notwendigen Festigkeit und Stabilität auf dem Zugdorn festsitzt. Sie gewährleistet jedoch andererseits eine relativ geringe Reibung zwischen dem Zugdorn und der Niethülse, die sich ihrerseits wieder förderlich auf die Ausbildung des Nietkopfes beim Setzen des Nietes auswirkt.

Vorzugsweise ist der Dornschaft mit einer Querschnittsverminderung versehen, die insbesondere als Sollbruchstelle ausgebildet ist, wobei mindestens eine Schwächungszone im Bereich dieser Querschnittsverminderung angeordnet ist. Dies verbessert das Reibungsverhalten der Niethülse auf dem Zugdorn noch weiter. Der Zugdorn wird mit einer noch höheren Zuverlässigkeit in der Niethülse festgehalten.

Dies ist vor allem dann der Fall, wenn Material aus der Niethülse im Bereich mindestens einer Ausnehmung in die Querschnittsverminderung des Dornschaftes hineinragt. Dann ergibt sich nämlich nicht nur eine Reibung, sondern sogar ein Formschluß zwischen der Niethülse und dem Zugdorn, der zu einem sicheren Halt der Niethülse auf dem Zugdorn führt. Für das Verformungsverhalten der Niethülse beim Setzen des Nietes spielt dieser kleine Formschluß praktisch keine Rolle. Die verbesserte Haltemöglichkeit der Niethülse auf dem Dornschaft führt jedoch zu einer verbesserten Verarbeitungsmöglichkeit des Blindniets mit Hilfe von automatisch oder halbautomatisch arbeitenden Nietsetz-Maschinen. Selbstverständlich können auch noch andere Profilierungen oder Einkerbungen auf dem Dornschaft vorgesehen sein, wenn eine Erhöhung der Haltekraft gewünscht ist. Diese Einkerbungen oder Profilierungen auf dem Dornschaft können sich dann unmittelbar unter den Ausnehmungen auf der Außenseite des Nietschafts befinden.

Vorzugsweise weist die Niethülse an ihrem mit dem Dornkopf zusammenwirkenden Ende eine nach innen geneigte Fase auf. Durch diese Fase, beispielsweise eine Ansenkung des Niethülsenendes, wird eine Druckkegelring-Bildung verhindert, da in der Anfangsphase der Schließkopfbildung die Reibungskräfte nur relativ klein sind und vom äußeren Niethülsenrand bis zum Zugdornschaft bis auf "Null" abnehmen. Durch diese Kräfteverteilung fließt das Niethülsenmaterial um die äußere Basiskante des Dornkopfes, verjüngt sich wieder und umschließt somit den Dornkopf. Hierdurch ergibt sich ein unverlierbarer Nietdorn-Füllabschnitt, der nicht beweglich ist. Folglich ergibt sich keine Geräuschbildung. Die Nietverbindung ist besser gegen Staub und Spritzwasser geschützt.

Vorzugsweise wird der Abstand zwischen der dem Ende am nächsten liegenden Schwächungszone und dem Ende in Abhängigkeit von der Form und der axialen und radialen Erstreckung des Dornkopfes so gewählt, daß beim gesetzten Niet der Dornkopf von der Niethülse zwar umschlossen, aber über einen vorbestimmten Mindestteil seiner Länge nach sichtbar ist. Hierdurch wird die oben dargestellte Druckkegelring-Bildung weiter vermindert. Es erfolgt also keine Materialtrennung im Bereich der Niethülse zwischen einem verfestigten Kegelring unterhalb des Dornkopfes und einem weniger verfestigten Bereich.

Vorzugsweise weist der Dornkopf eine Form auf, die durch einen Teil einer Kugel gebildet ist. Diese Form ist nicht nur optisch gefällig. Sie vermindert auch das Risiko von Verletzungen und verbessert das Fließverhalten des Materials der Niethülse außen um den Kopf herum, so daß eine sichere Nietdorn-Verriegelung im Schließkopf und eine gut sitzende und fest haltende Nietverbindung erzeugt werden kann.

Die Erfindung betrifft auch ein Verfahren zur Herstellung eines Nietes, bei dem Zugdorn und Niethülse zusammengesetzt werden und danach die Ausnehmungen durch Einprägen hergestellt werden.

Bei diesem Verfahren wird durch das Anbringen der Ausnehmungen keine Aufweitung der Niethülse erzeugt, die zu einer Verminderung der Haltekräfte der Niethülse auf den Zugdorn führen, sondern im Gegenteil eine Verfestigung. Die Niethülse bleibt sicher auf dem Zugdorn sitzen.

Die Ausnehmungen werden durch Einprägen hergestellt. Einprägen ist ein relativ schnelles Verfahren, das mit praktisch einem Arbeitsschritt die gewünschte Form der Ausnehmung erzeugen kann. Hierzu ist es im Prinzip lediglich notwendig, daß ein geeignetes Werkzeug tangential an den Umfang der Niethülse gepreßt und eingedrückt wird.

Vorzugsweise werden Niethülsen verwendet, die bezogen auf den Zugdorn eine vorbestimmte Übergröße aufweisen, wobei die Niethülse beim Herstellen der Ausnehmungen partiell zur Anlage an den Zugdorn gebracht wird. Die Verwendung einer Übergröße erleichtert das Einfädeln und Aufschieben der Niethülse auf den Dorn. Durch das Anbringen der Ausnehmungen durch Einprägen wird die Niethülse dann dennoch sicher auf dem Zugdorn befestigt.

Die Erfindung wird im folgenden anhand eines bevorzugten Ausführungsbeispiels in Verbindung mit der Zeichnung beschrieben. Hierin zeigen:
- Fig. 1: einen Schnitt durch einen Blindniet,
- Fig. 2: einen Schnitt II-II nach Fig. 1 und
- Fig. 3: einen schematischen Schnitt durch eine Nietverbindung mit einem Blindniet dieser Art.

Ein Blindniet 1 weist eine Niethülse 2 und einen Zugdorn 3 auf. Der Zugdorn 3 weist einen Dornschaft 4 und einen Dornkopf 5 auf. Der Dornkopf 5 hat im wesentlichen die Form einer Halbkugel. Als Material kommen praktisch alle Stoffe in Betracht, die bisher auch für Blindniete verwendet wurden, z.B. Stahl, Chrom-Nickel-Stahl, Nickel-Kupfer-Legierungen oder andere rostfreie Stähle, Aluminium, Kupfer oder Legierungen davon oder auch Kunststoffe.

Der Dornschaft 4 weist eine Querschnittsverminderung 6 auf, die eine Sollbruchstelle des Dornschaftes 4 definiert. Ferner können weitere Oberflächenstrukturen 7 vorgesehen sein. Diese können praktisch jede Form haben, z.B. Längs- und Querrändel, Hinterschneidungen, Ausprägungen und Materialerhebungen jeder Art.

Die Niethülse 2 weist einen im wesentlichen hohlzylindrischen Körper 8 auf, der auf den Zugdorn aufgeschoben ist. An dem Ende der Niethülse 2, das mit dem Dornkopf 5 in Berührung kommt, ist eine Fase 9 vorgesehen. An diesem Ende ist die Niethülse 2 von außen nach innen abfallend abgeschrägt. Die Fase 9 ist hierbei so ausgebildet, daß bei einer Bewegung des Dornkopfes 5 in Richtung auf die Niethülse 2 hin der Dornkopf 5 zur Anlage an die Fase 9 kommt.

Am entgegengesetzten Ende weist die Niethülse 2 einen umlaufenden Setzkopf 10 auf.

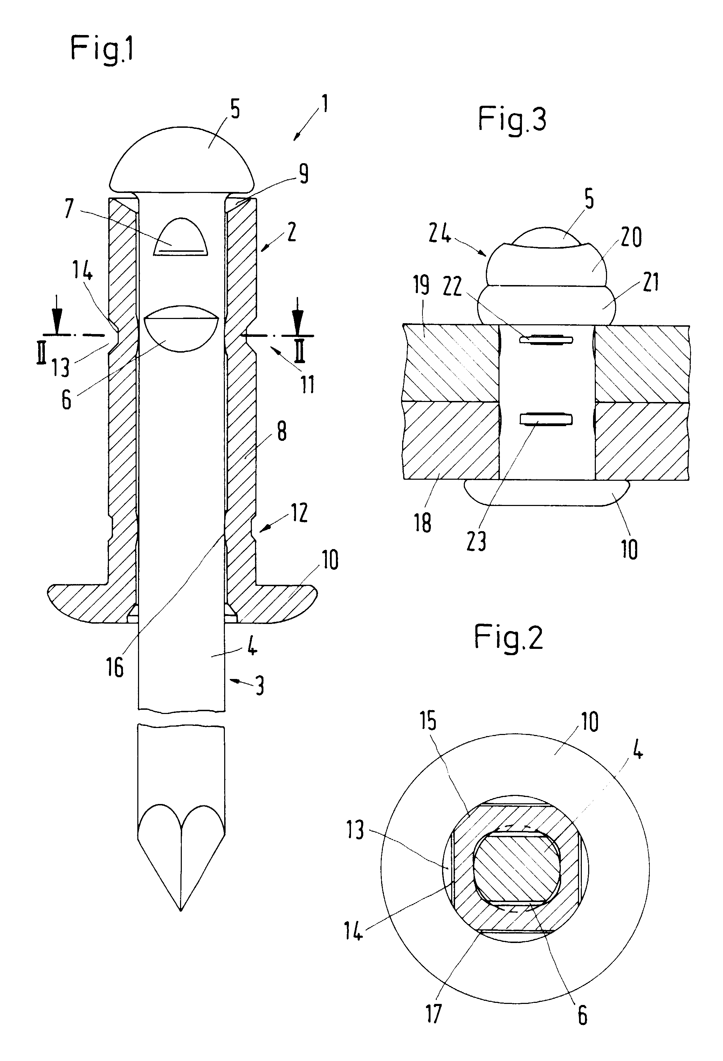

Ferner weist die Niethülse 2 mindestens eine Schwächungszone 11 auf, dargestellt sind in Fig. 1 zwei Schwächungszonen 11 und 12.

Jede Schwächungszone ist, wie dies aus Fig. 2 ersichtlich ist, durch vier gleichförmig über den Umfang verteilte Ausnehmungen 13 gebildet. Die vier Ausnehmungen 13 liegen einander paarweise diametral gegenüber. Die Ausnehmungen haben eine spezielle Form. Sie weisen nämlich einen Boden 14 auf, der entlang einer Sekante an den Zylinderumfang der Niethülse 2 führt. Der Boden 14 verläuft also parallel zu einer Tangente an den Zylinderumfang der Niethülse 2. Er kann gegebenenfalls auch noch tiefer in die Niethülse 2 eindringen. Wie aus Fig. 2 ersichtlich ist, verbleiben zwischen den einzelnen Ausnehmungen 13 Winkelbereiche 15, in denen die ursprünglich hohlzylindrische Form der Niethülse 2 nicht bearbeitet oder verändert worden ist. Hier hat sie ihre Zylinderform behalten. Durch die spezielle Ausbildung der Ausnehmungen 13 wird hier ein allmählicher Übergang von einer relativ dünnen Materialdicke der Niethülse 2 im Bereich der Mitte einer jeden Ausnehmung 13 zu der vollen Materialstärke der Niethülse im Bereich der Winkelbereiche 15 geschaffen. Im Bereich der Winkelbereiche 15 bleibt also "gesundes" Material übrig, das später zu einer verbesserten Ausbildung eines Schließkopfes führt, wie er beispielhaft in Fig. 3 dargestellt ist.

Die Ausnehmungen 13 sind durch Einprägen hergestellt worden. Dieses Einprägen erfolgt am besten erst dann, wenn die Niethülse 2 bereits auf den Zugdorn 3 aufgesetzt ist. Durch das Einprägen bekommen die Ausnehmungen 13 eine in Axialrichtung abgerundete Form einerseits. Andererseits wird durch das Einprägen nicht nur die Niethülse 2 an ihrem Außenumfang verformt, sondern es erfolgt auch eine kleinere Ausformung nach innen, so daß die Niethülse 2 hier sozusagen punktweise oder zumindest im Bereich nur kleiner Flächen zur Anlage an den Dornschaft 4 des Zugdornes 3 gebracht wird. Im Bereich der Schwächungszone 12 entsteht hier eine Anlagefläche 16, an der die Niethülse unter Reibschluß am Zugdorn 3 anliegt. Im Bereich der Schwächungszone 11 ist das Material der Niethülse 2 sogar in die Querschnittsverminderung 6 hinein verdrängt worden, wie dies aus Fig. 2 ersichtlich ist. Dort ist in einem Bereich 17 eine Materialverdrängung in die Querschnittsverminderung 6 hinein zu beobachten, d.h. in den durch gestrichelte Linien dargestellten Querschnitt des Zugdorns 3 hinein. Hier erfolgt also nicht nur ein Reibschluß, sondern sogar ein Formschluß zwischen der Niethülse 2 und dem Zugdorn 3.

Fig. 3 zeigt beispielhaft die Ausbildung einer Nietverbindung zwischen zwei Platten 18, 19 mit einem Blindniet der in Fig. 1 und 2 gezeigten Art. Der Setzkopf 10 kommt hierbei in Anlage an die eine Platte 18. Durch Ziehen am Zugdorn 3, beispielsweise mit einem Setzgerät, dessen Mundstück am Setzkopf 10 anliegt, wird der Dornkopf 5 in die Niethülse 2 hineingezogen. Aufgrund des Vorhandenseins der Schwächungszonen 11, 12 kann er aber nicht die gesamte Niethülse 2 durchwandern. In den Schwächungszonen hat vielmehr eine Verfestigung des Materials stattgefunden, die nun dazu führt, daß der Dornkopf 5 nur bis zur ersten Schwächungszone gezogen werden kann. Durch die steigende Setzkraft wird die Niethülse 2 gestaucht und füllt das Nietloch aus. Gleichzeitig oder kurz darauf legt sich die Niethülse in Form von Wülsten 20, 21, die dann den Schließkopf bilden, an die obere Platte 19 an. Die Werkstücke 18, 19 sind dann zusammengefügt. Durch diese Funktionsweise paßt sich der Niet der jeweiligen Materialdicke an. Obwohl man dies im Nachhinein nicht immer genau nachvollziehen kann, kann man als Faustregel davon ausgehen, daß zwischen zwei Wülsten immer eine Schwächungszone angeordnet ist. Die dem angefasten Ende am nächsten benachbarte Schwächungszone ist hierbei mit ihrer Entfernung so gewählt, daß der Wulst 20 den Dornkopf 5 zwar teilweise umschließt, der Dornkopf 5 aber noch sichtbar ist. Der Dornkopf 5 und damit der verbleibende Abschnitt des Zugdorns 3 wird in der Niethülse 2 dadurch fest verriegelt.

Der in Fig. 3 dargestellte Blindniet hat weitere Schwächungszonen 22, 23. Wären die Platten 18, 19 dünner, würden diese Schwächungszonen gegebenenfalls zu weiteren Wülsten bei der Ausbildung des Nietkopfes 24 führen. Würde man hingegen dickere Platten 18, 19 verwenden, ergäbe sich möglicherweise anstelle der dargestellten zwei Wülste 20, 21 nur ein Wulst. In jedem Fall ist eine zuverlässige Nietverbindung sichergestellt.

## Patentansprüche

1. Blindniet (1) mit einem Zugdorn (3), der einen Dornkopf (5) und einen Dornschaft (4) aufweist, und mit einer im wesentlichen zylinderförmigen Niethülse (2), die den Zugdorn (3) auf einem Teil seiner Länge umgibt, und die in Längserstreckung mindestens eine Schwächungszone (11, 12) aufweist, wobei jede Schwächungszone (11, 12) durch mehrere in Umfangsrichtung verteilte und im wesentlichen an der gleichen axialen Position angeordnete Ausnehmungen (13) gebildet ist, dadurch gekennzeichnet, daß die Böden (14) der Ausnehmungen jeweils im wesentlichen eine Sekante zum Zylinderumfang der Niethülse (2) bilden oder in Radialrichtung innerhalb dieser Sekante verlaufen, so daß sie in ihrer Mitte weiter in Richtung auf die Mittelachse der Niethülse (2) vertieft sind als an deren Rändern.

2. Blindniet nach Anspruch 1, dadurch gekennzeichnet, daß die Ausnehmungen (13) paarweise einander diametral gegenüberliegend angeordnet sind.

3. Blindniet nach Anspruch 1 oder 2, dadurch gekennzeichnet, daß vier Ausnehmungen (13) vorgesehen sind.

4. Blindniet nach einem der Ansprüche 1 bis 3, dadurch gekennzeichnet, daß die Niethülse (2) in einem vorbestimmten Winkelbereich (15) zwischen den jeweiligen Ausnehmungen (13) im wesentlichen die Form eines Hohlzylinders aufweist.

5. Blindniet nach einem der Ansprüche 1 bis 4, dadurch gekennzeichnet, daß die Ausnehmungen (13) durch Einprägungen gebildet sind.

6. Blindniet nach einem der Ansprüche 1 bis 5, dadurch gekennzeichnet, daß die Ausnehmungen (13) einen abgerundeten Querschnitt aufweisen.

7. Blindniet nach einem der Ansprüche 1 bis 6, dadurch gekennzeichnet, daß die Niethülse (2) im Bereich der Ausnehmungen (13) nach innen ausgeformt ist und mit den so gebildeten Vorsprüngen (16) am Dornschaft (4) anliegt.

8. Blindniet nach einem der Ansprüche 1 bis 7, dadurch gekennzeichnet, daß der Dornschaft (4) mit einer Querschnittsverminderung (6) versehen ist, die insbesondere als Sollbruchstelle ausgebildet ist, wobei die Schwächungszone (11) bzw. eine der Schwächungszonen (11, 12) im Bereich dieser Querschnittsverminderung angeordnet ist.

9. Blindniet nach Anspruch 8, dadurch gekennzeichnet, daß das Material (17) aus der Niethülse (2) im Bereich mindestens einer Ausnehmung (13) in die Querschnittsverminderung (6) des Dornschaftes (4) hineinragt.

10. Blindniet nach einem der Ansprüche 1 bis 9, dadurch gekennzeichnet, daß die Niethülse (2) an ihrem mit dem Dornkopf (5) zusammenwirkenden Ende eine nach innen geneigte Fase (9) aufweist.

11. Blindniet nach Anspruch 10, dadurch gekennzeichnet, daß der Abstand zwischen der dem Ende am nächsten liegenden Schwächungszone (11) und dem Ende in Abhängigkeit von der Form und der axialen und radialen Erstreckung des Dornkopfes (5) so gewählt ist, daß beim gesetzten Niet (Fig. 3) der Dornkopf (5) von der Niethülse (2) zwar umschlossen, aber über einen vorbestimmten Mindestteil seiner Länge noch sichtbar ist.

12. Blindniet nach Anspruch 11, dadurch gekennzeichnet, daß der Dornkopf (5) eine Form aufweist, die durch einen Teil einer Kugel gebildet ist.

13. Verfahren zur Herstellung eines Niets nach einem der Ansprüche 1 bis 12, dadurch gekennzeichnet, daß Zugdorn (3) und Niethülse (2) zusammengesetzt werden und danach die Ausnehmungen durch Einprägen hergestellt werden.

14. Verfahren nach Anspruch 13, dadurch gekennzeichnet, daß Niethülsen (2) verwendet werden, die bezogen auf den Zugdorn (3) eine vorbestimmte Übergröße aufweisen, wobei die Niethülse (2) beim Herstellen der Ausnehmungen partiell zur Anlage an den Zugdorn (3) gebracht wird.

## Claims

1. Blind rivet (1) with a tensile mandrel (3) comprising a mandrel head (5) and a mandrel shank (4), and with an essentially cylindrical rivet sleeve (2) which surrounds the tensile mandrel (3) over part of its length, and which comprises at least one weakening zone (11, 12) in the longitudinal extent, wherein each weakening zone (11, 12) is formed by several recesses (13) which are distributed in the circumferential direction and essentially arranged at the same axial position, characterised in that the bottoms (14) of the recesses in each case essentially form a secant to the cylinder circumference of the rivet sleeve (2) or run in a radial direction within this secant, so that at their centre they are made deeper in a direction towards the centre axis of the rivet sleeve (2) than at the edges.

2. Blind rivet according to claim 1, characterised in that the recesses (13) are arranged in pairs diametrically opposite each other.

3. Blind rivet according to claim 1 or 2, characterised in that four recesses (13) are provided.

4. Blind rivet according to any of claims 1 to 3, characterised in that the rivet sleeve (2) in a predetermined angular range (15) between the respective recesses (13) has essentially the shape of a hollow cylinder.

5. Blind rivet according to any of claims 1 to 4, characterised in that the recesses (13) are formed by indentations.

6. Blind rivet according to any of claims 1 to 5, characterised in that the recesses (13) have a rounded cross-section.

7. Blind rivet according to any of claims 1 to 6, characterised in that the rivet sleeve (2) is drawn out inwardly in the region of the recesses (13) and with the projections (16) formed in this way abuts against the mandrel shank (4).

8. Blind rivet according to any of claims 1 to 7, characterised in that the mandrel shank (4) is provided with a cross-sectional reduction (6) which in particular is constructed as a predetermined break point, wherein the weakening zone (11) or one of the weakening zones (11, 12) is arranged in the region of this cross-sectional reduction.

9. Blind rivet according to claim 8, characterised in that the material (17) from the rivet sleeve (2) in the region of at least one recess (13) extends into the cross-sectional reduction (6) of the mandrel shank (4).

10. Blind rivet according to any of claims 1 to 9, characterised in that the rivet sleeve (2) at its end cooperating with the mandrel head (5) comprises an inwardly inclined chamfer (9).

11. Blind rivet according to claim 10, characterised in that the distance between the weakening zone (11) closest to the end and the end is selected as a function of the shape and the axial and radial extents of the mandrel head (5) in such a way that when the rivet is set (Fig. 3) the mandrel head (5) is surrounded by the rivet sleeve (2) but still visible over a predetermined minimum portion of its length.

12. Blind rivet according to claim 11, characterised in that the mandrel head (5) has a shape which is formed by part of a sphere.

13. Method for the manufacture of a rivet according to any of claims 1 to 12, characterised in that the tensile mandrel (3) and rivet sleeve (2) are assembled and then the recesses are made by indentation.

14. Method according to claim 13, characterised in that rivet sleeves (2) which have a predetermined excess size relative to the tensile mandrel (3) are used, wherein during formation of the recesses the rivet sleeve (2) is brought partially into contact with the tensile mandrel (3).

## Revendications

1. Rivet aveugle (1) comprenant une broche de traction (3) munie d'une tête (5) et d'un fût (4), et une douille (2) pour l'essentiel cylindrique, entourant la broche de traction (3) sur une partie de sa longueur et comportant au moins une zone d'affaiblissement (11, 12) sur l'étendue longitudinale, chaque zone d'affaiblissement (11, 12) étant formée par plusieurs évidements (13) répartis dans le sens périphérique et disposés, pour l'essentiel, au même emplacement axial, caractérisé par le fait que les fonds (14) des évidements forment pour l'essentiel une sécante par rapport au pourtour cylindrique de la douille (2) du rivet ou s'étendent, respectivement, dans le sens radial à l'intérieur de cette sécante, de sorte qu'ils sont plus profondément encaissés en leur centre que sur leurs bords, en direction de l'axe médian de ladite douille (2) du rivet.

2. Rivet aveugle selon la revendication 1, caractérisé par le fait que les évidements (13) sont agencés par paires, diamétralement à l'opposé les uns des autres.

3. Rivet aveugle selon la revendication 1 ou 2, caractérisé par le fait que quatre évidements (13) sont prévus.

4. Rivet aveugle selon l'une des revendications 1 à 3, caractérisé par le fait que la douille (2) dudit rivet revêt, pour l'essentiel, la forme d'un cylindre creux dans une zone angulaire prédéterminée (15) située entre les évidements (13) respectifs.

5. Rivet aveugle selon l'une des revendications 1 à 4, caractérisé par le fait que les évidements (13) sont formés par des empreintes.

6. Rivet aveugle selon l'une des revendications 1 à 5, caractérisé par le fait que les évidements (13) présentent une section transversale arrondie.

7. Rivet aveugle selon l'une des revendications 1 à 6, caractérisé par le fait que la douille (2) dudit rivet est déformée vers l'intérieur dans la région des évidements (13), et est appliquée contre le fût (4) de la broche par les protubérances (16) ainsi formées.

8. Rivet aveugle selon l'une des revendications 1 à 7, caractérisé par le fait que le fût (4) de la broche est muni d'une diminution de section transversale (6) notamment réalisée sous la forme d'une zone à rupture programmée, la zone d'affaiblissement (11) ou, respectivement, l'une des zones d'affaiblissement (11, 12) étant située dans la région de cette diminution de section transversale.

9. Rivet aveugle selon la revendication 8, caractérisé par le fait que le matériau (17) refoulé de la douille (2) dudit rivet s'engage, dans la région d'au moins un évidement (13), dans la diminution de section transversale (6) du fût (4) de la broche.

10. Rivet aveugle selon l'une des revendications 1 à 9, caractérisé par le fait que la douille (2) dudit rivet comporte un biseau (9) incliné vers l'intérieur à son extrémité coopérant avec la tête (5) de la broche.

11. Rivet aveugle selon la revendication 10, caractérisé par le fait que la distance, entre l'extrémité et la zone d'affaiblissement (11) la plus rapprochée de ladite extrémité, est choisie en fonction de la forme et de l'étendue axiale et radiale de la tête (5) de la broche, de façon telle que ladite tête (5) de la broche soit, certes, ceinturée par la douille (2) du rivet à l'état posé dudit rivet (figure 3), mais soit toutefois encore visible sur une partie minimale prédéterminée de sa longueur.

12. Rivet aveugle selon la revendication 11, caractérisé par le fait que la tête (5) de la broche possède une configuration formée par une partie d'une sphère.

13. Procédé de fabrication d'un rivet selon l'une des revendications 1 à 12, caractérisé par le fait que la broche de traction (3) et la douille (2) du rivet sont assemblées, après quoi les évidements sont ménagés par empreinte.

14. Procédé selon la revendication 13, caractérisé par le fait qu'on utilise des douilles (2) de rivets qui présentent un surdimensionnement prédéterminé par rapport à la broche de traction (3), la douille (2) de rivet étant partiellement appliquée contre ladite broche de traction (3) lors du façonnage des évidements.
